# EUROPÄISCHE PATENTSCHRIFT

(11) **EP 3 455 849 B1**
(45) Veröffentlichungstag und Bekanntmachung des Hinweises auf die Patenterteilung: **07.08.2019**
(21) Anmeldenummer: 17780706.2
(22) Anmeldetag: 04.10.2017
(51) Int. Cl.: G10K 11/178, F16F 7/10, H04R 29/00

(54) **AKTIVES SCHWINGUNGSABSORPTIONSSYSTEM ZUR ABSORPTION EINER SCHWINGUNG EINES SCHWINGENDEN ELEMENTS SOWIE KRAFTFAHRZEUG MIT DEM AKTIVEN SCHWINGUNGSABSORPTIONSSYSTEM UND VERFAHREN ZUM BETREIBEN DES AKTIVEN SCHWINGUNGSABSORPTIONSSYSTEMS**
ACTIVE VIBRATION ABSORPTION SYSTEM FOR ABSORBING VIBRATION OF A VIBRATING ELEMENT, MOTOR VEHICLE HAVING THE ACTIVE VIBRATION ABSORPTION SYSTEM, AND METHOD FOR OPERATING THE ACTIVE VIBRATION ABSORPTION SYSTEM
SYSTÈME ACTIF D'ABSORPTION DE VIBRATIONS POUR L'ABSORPTION D'UNE VIBRATION D'UN ÉLÉMENT VIBRANT AINSI QUE VÉHICULE AUTOMOBILE ÉQUIPÉ DUDIT SYSTÈME ACTIF D'ABSORPTION DE VIBRATIONS ET PROCÉDÉ POUR FAIRE FONCTIONNER LEDIT SYSTÈME ACTIF D'ABSORPTION DE VIBRATIONS

(30) Priorität: 30.11.2016 DE 102016223864
(43) Veröffentlichungstag der Anmeldung: 20.03.2019
(73) Patentinhaber: Audi AG, 85045 Ingolstadt (DE)
(72) Erfinder: DREFFKE, Gerald, 85276 Pfaffenhofen (DE); HINRICHSEN, Lars, 85051 Ingolstadt (DE); BOCK, Florian, 85057 Ingolstadt (DE)
(86) Internationale Anmeldenummer: PCT/EP2017/075116
(87) Internationale Veröffentlichungsnummer: WO 2018/099631

(56) Entgegenhaltungen:
- JP-A- 2011 137 527
- JP-B2- 3 551 653
- US-A- 5 651 072
- US-A1- 2012 217 108

## Beschreibung

Die Erfindung betrifft ein aktives Schwingungsabsorptionssystem zur Absorption einer Schwingung eines schwingenden Elements. Darüber hinaus betrifft die vorliegende Erfindung ein Kraftfahrzeug mit einem derartigen Schwingungsabsorptionssystem sowie ein Verfahren zum Betreiben eines solchen Schwingungsabsorptionssystems.

Ein Element kann unter bestimmten Umständen in Schwingung versetzt werden. So kann beispielsweise eine mechanische Lagerung in einem Kraftfahrzeug während einer Fahrt vibrieren und somit gegebenenfalls durch diese Schwingung unerwünschte akustische Phänomene erzeugen. Zur Absorption der Schwingung des schwingenden Elements ist es bekannt, das schwingende Element mit einem aktiven Schwingungsdämpfer zu koppeln. So beschreibt die EP 1 218 716 B1, ein physisches Objekt an einen Messwandler zu koppeln, um eine Bewegung des physischen Objekts daraufhin zu steuern. Der Messwandler stellt ein Messsignal bereit, welches die Bewegung des physischen Objekts beschreibt. Der Messwandler ist mit einer Steuereinheit gekoppelt, welche das Messsignal abtastet und ein Stellsignal bereitstellt, um eine Veränderung der Bewegung des physischen Objekts zu bewirken. Das System sieht jeweils einen unterschiedlichen Zeitrahmen für eine Messung der Bewegung des physischen Objekts und für eine Ausführung einer in dem Stellsignal enthaltenen Stellfunktion vor.

Nachteilig hierbei ist, dass die Ausführung der Stellfunktion als Reaktion auf die gemessene Bewegung des physischen Objekts mit einer Zeitverzögerung verbunden ist, da das System abwechselnd eine Messung der Bewegung und eine Korrekturmaßnahme der Bewegung ausführt. Somit kann die Steuerung der Bewegung des physischen Objekts an Präzision verlieren.

Aus der EP 0 805 432 A2 ist ein multidimensionales Rückmeldungssystem bekannt, welches dafür verwendet wird, eine Geräuschkomponente einer Vibration zu reduzieren. Hierzu sind zwei oder mehrere Aktoren vorgesehen.

In der DE 698 31 603 T2 ist eine aktive Schwingungsdämpferanordnung zur Anbringung an ein schwingendes Gebilde beschrieben, wobei ein Schwingungsdämpfer einen Bezugssensor aufweist, welcher Schwingungen des schwingenden Gebildes misst. Zur Dämpfung der Schwingungen wird der Schwingungsdämpfer derart angesteuert, dass dieser eine Gegenschwingung erzeugt.

Aus der JP 3 551653 B2 ist eine weitere aktive Schwingungsdämpfungsanordnung für Fahrzeuge bekannt.

Nachteilig bei derartigen Schwingungsdämpfern ist jedoch, dass diese einen komplexen Aufbau aufweisen, welcher mit hohen Material- und Wartungskosten verbunden ist.

Aufgabe der vorliegenden Erfindung ist es daher, ein System zur Absorption einer Schwingung eines schwingenden Elements zu schaffen, welche mit einem einfachen Aufbau eine präzise Dämpfung der Schwingung bewirkt.

Diese Aufgabe wird durch die Gegenstände der unabhängigen Patentansprüche gelöst. Vorteilhafte Weiterbildungen der Erfindung sind durch die Unteransprüche, die folgende Beschreibung und die Figuren offenbart.

Die vorliegende Erfindung basiert auf der Erkenntnis, dass ein aktives Schwingungsabsorptionssystem, welches nur einen einzigen Körperschallerreger sowohl zum Erfassen als auch zum Absorbieren einer Schwingung eines schwingenden Elements umfasst, hierdurch einen besonders leichten Aufbau aufweist. So wird im Gegensatz zu bekannten Schwingungsdämpfern ein kleinerer Bauraum für das aktive Schwingungsabsorptionssystem benötigt. Dessen Gewicht und Kosten werden durch die Verwendung eines einzigen Körperschallerregers ebenfalls reduziert.

Des Weiteren basiert die vorliegende Erfindung auf der Erkenntnis, dass bei der kombinierten Nutzung des Körperschallerregers zum Erfassen und Absorbieren das Schwingungsabsorptionssystem derart eingerichtet sein sollte, dass es aus einem Messsignal ermitteln kann, welcher Anteil aus dem Messsignal einer Schwingung des schwingenden Elements zuzuordnen ist, wobei dieser Anteil im Folgenden als Detektionsanteil bezeichnet wird. Weiterhin sollte das Schwingungsabsorptionssystem dazu eingerichtet sein, aus dem selbigen Messsignal denjenigen Anteil zu ermitteln, welcher durch eine zukünftige vorzunehmende Absorption der Schwingung verursacht wird, welcher im Folgenden als Steueranteil bezeichnet wird. Somit wird ermöglicht, gleichzeitig eine Messung der Schwingung des schwingenden Elements und eine Dämpfung und/oder Absorption dieser Schwingung durch das aktive Schwingungsabsorptionssystem auszuführen.

Erfindungsgemäß wird hierzu das aktive Schwingungsabsorptionssystem zur Absorption einer Schwingung eines schwingenden Elements nach Anspruch 1 geschaffen: Das aktive Schwingungsabsorptionssystem umfasst einen Körperschallerreger mit einem Koppelelement zum Koppeln an das schwingende Element und mit einer elektrischen Spule zum Bewegen des Koppelelements mittels eines Spulenstroms. Das Koppelelement kann also mit dem Element verbunden werden, beispielsweise verschraubt werden, somit kann dann durch den Spulenstrom eine Bewegung des Elements beeinflusst werden.

Der Körperschallerreger ist zusätzlich dazu eingerichtet, eine induzierte Spannung in der elektrischen Spule zu erfassen und ein mit der erfassten induzierten Spannung korreliertes Messsignal bereitzustellen. Beispielsweise befindet sich die elektrische Spule innerhalb eines Magnetfelds von beispielsweise einem Permanentmagneten. In bekannter Weise wird durch den Spulenstrom innerhalb der elektrischen Spule ein magnetisches Wechselfeld aufgebaut, welches eine Bewegung der elektrischen Spule und/oder des Koppelelements bewirken kann. Ebenfalls kann in bekannter Weise umgekehrt durch eine Bewegung des Koppelelements und somit einer Bewegung der elektrischen Spule eine Spannung in der elektrischen Spule induziert werden. Somit wird eine Schwingung des schwingenden Elements durch eine induzierte Spannung in der elektrischen Spule erfasst. Der Körperschallerreger ist somit sensorlos, denn er benötigt keinen zusätzlichen Sensor, um die Schwingungen des schwingenden Elements zu erfassen.

Das Messsignal umfasst aber nicht nur die durch das schwingende Element induzierte Spannung, ausgedrückt durch den Detektionsanteil, sondern auch eine durch einen angelegten Spulenstrom verursachte Spannung, ausgedrückt durch den Steueranteil. Diese gilt es zu trennen. So kann das Messsignal beispielsweise die Spannung, die an der elektrischen Spule gemessen wurde, beschreiben. Ein Anteil dieser Spannung kann dadurch entstehen, dass ein angelegter Spulenstrom in der elektrischen Spule fließt und ein weiterer Anteil dieser Spannung kann dadurch entstehen, dass die Schwingung des schwingenden Elements eine Spannung in der elektrischen Spule induziert. Da der Körperschallerreger lediglich eine einzige elektrische Spule aufweist, erfasst das Messsignal zeitgleich beide Anteile der Spannung, den Detektionsanteil und den Steueranteil.

Der Körperschallerreger wird durch ein Steuergerät gesteuert. Dieses Steuergerät ist dazu eingerichtet, das von dem Körperschallerreger bereitgestellte Messsignal zu empfangen und in Abhängigkeit von dem Messsignal eine Soll-Stromstärke des Spulenstroms zu ermitteln. Die Soll-Stromstärke ist dazu eingerichtet, die Bewegung des Koppelelements derart einzustellen, dass die Schwingung des schwingenden Elements zumindest teilweise absorbiert wird. Die Soll-Stromstärke beschreibt also diejenige Stromstärke, die der angelegte Spulenstrom in der elektrischen Spule aufweisen sollte, um das Koppelelement derart in Bewegung zu versetzen oder mit einer Kraft zu beaufschlagen, dass die Schwingung des schwingenden Elements zumindest teilweise absorbiert wird. Weiterhin ist das Steuergerät dazu eingerichtet, eine Ist-Stromstärke des angelegten Spulenstroms auf die Soll-Stromstärke zu regeln, wobei die Ist-Stromstärke diejenige Stromstärke beschreibt, die der Spulenstrom zu einem aktuellen Zeitpunkt aufweist.

Erfindungsgemäß ist das Steuergerät weiterhin dazu eingerichtet, aus dem Messsignal den Detektionsanteil und den Steueranteil zu ermitteln. Der Detektionsanteil beschreibt in der erwähnten Weise denjenigen Anteil eines Signalwerts des Messsignals, der auf die durch das schwingende Element induzierte Spannung zurückzuführen ist. Der Steueranteil korrespondiert zu demjenigen Anteil des Signalwerts, welcher auf den angelegten Spulenstrom zurückzuführen ist.

Zur Ermittlung der Soll-Stromstärke, welche die Bewegung des Koppelelements daraufhin regelt, dass die Schwingung des schwingenden Elements beispielsweise durch eine Gegenschwingung des Koppelelements zumindest teilweise absorbiert wird, ist es von Vorteil, dass das Steuergerät dazu eingerichtet ist, zwischen dem Detektionsanteil und den Steueranteil zu unterscheiden, um somit lediglich in Abhängigkeit des Detektionsanteils die Soll-Stromstärke zu ermitteln. Dadurch wird eine Bewegung des Koppelelements zielgenau auf die Schwingung des schwingenden Elements angepasst.

Das Steuergerät weist zum Durchführen der beschriebenen Schritte eine Prozessoreinrichtung auf, die dazu eingerichtet ist, die Soll-Stromstärke zu ermitteln und die Ist-Stromstärke zu regeln. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ermittlung der Soll-Stromstärke und die Regelung der Ist-Stromstärke durchzuführen. Der Programmcode kann in einem Datenspeicher der Prozessoreinrichtung gespeichert sein.

Der besagte Körperschallerreger ist dazu eingerichtet, in der beschriebenen Weise eine Erfassung der Schwingung des schwingenden Elements und eine Absorption dieser Schwingung durch eine entsprechende Ansteuerung durch das Steuergerät gleichzeitig auszuführen. Vorteilhaft wird dadurch, dass das aktive Schwingungsabsorptionssystem eine stetige Regelung der Ist-Stromstärke vornehmen kann, welche an eine momentane Größe der Schwingung des schwingenden Elements angepasst ist. Somit kann die Schwingung des schwingenden Elements präzise gedämpft und im Idealfall absorbiert werden. Dadurch werden eventuelle störende akustische Phänomene, die ansonsten durch die Schwingung des schwingenden Elements entstehen, verringert. Aufgrund der kontinuierlichen Regelung der Ist-Stromstärke durch das Steuergerät und somit der kontinuierlichen Regelung der Bewegung des Koppelelements, welche die Schwingung des schwingenden Elements absorbiert, ist keine weitere Anpassung und/oder Steuerung des Koppelelements notwendig, um die Schwingung zu absorbieren.

Die Erfindung umfasst auch optionale Weiterbildungen des erfindungsgemäßen aktiven Schwingungsabsorptionssystems, durch die sich zusätzliche Vorteile ergeben.

In vorteilhafter Weiterbildung der Erfindung ist das Steuergerät dazu eingerichtet, den Detektionsanteil und den Steueranteil gleichzeitig für einen gleichen Abtastwert oder Signalwert, welcher in dem Messsignal enthalten ist, zu ermitteln. Der Abtastwert oder der Signalwert beschreibt beispielsweise die aktuelle Spannung, die an der elektrischen Spule gemessen wird, wobei die Spannung einerseits durch den angelegten Spulenstrom verursacht wird und andererseits durch eine Schwingung des schwingenden Elements und somit einer Schwingung des Koppelelements induziert wird. Somit kann aus jedem Signalwert ermittelt werden, wie hoch der Anteil der induzierten Spannung ist, welcher durch die Schwingung verursacht ist. Das Steuergerät benötigt also keine weitere Information aus einem weiteren Signalwert. Somit entsteht durch das Steuergerät keine Verzögerung bei der Ermittlung der Soll-Stromstärke und somit keine Verzögerung bei der Regelung der Ist-Stromstärke des Spulenstroms, welcher auf die elektrische Spule angelegt wird, sodass die Schwingung des schwingenden Elements schnell und präzise absorbiert wird.

Bevorzugt ist das Steuergerät dazu eingerichtet, den Detektionsanteil und den Steueranteil mittels vorbestimmten Übertragungsfunktionen zu ermitteln. So können von den beiden Anteilen, dem Detektionsanteil und dem Steueranteil, die jeweilige Ursache der Spannung in der elektrischen Spule unterschiedliche Übertragungsfunktionen aufweisen. Das Steuergerät weist somit im Vorhinein eine Information darüber auf, welche Form der Detektionsanteil und welche Form der Steueranteil in dem von dem Körperschallerreger bereitgestellten Messsignal annimmt, wenn eine bestimmte Ursache vorliegt. Die Übertragungsfunktionen erlauben nun nochmals vom Messsignal auf die Ursache zu schließen. Dadurch kann eine direkte Auswertung des Messsignals durch das Steuergerät erfolgen und die Soll-Stromstärke zur möglichst schnellen Absorption der Schwingung des schwingenden Elements ermittelt werden. Vorteilhaft wird dadurch auch, dass keine weiteren Sensoren und/oder Bauteile zur Bestimmung der Soll-Stromstärke benötigt werden.

In einer weiteren vorteilhaften Weiterbildung der Erfindung ist das Steuergerät dazu eingerichtet, die Soll-Stromstärke in bekannter Weise derart zu ermitteln, dass eine Bewegungsgeschwindigkeit des schwingenden Elements zu Null geregelt wird. Beträgt die Bewegungsgeschwindigkeit des schwingenden Elements null, wird die Schwingung des schwingenden Elements durch den Körperschallerreger absorbiert. Vorteilhaft wird durch diese Regelung, dass das Koppelelement mittels des Spulenstroms, welcher die Soll-Stromstärke aufweist, zu einer direkten Dämpfung und/oder Absorption der Schwingung des schwingenden Elements gelenkt werden kann.

Wie bereits aufgeführt kann das Messsignal die Spulenspannung enthalten. In einer bevorzugten Weiterbildung der Erfindung ist der Körperschallerreger entsprechend dazu eingerichtet, zu wenigstens einem vorgebbaren Zeitpunkt die Spannung in der elektrischen Spule zu messen. Dieser Zeitpunkt kann beispielsweise fest vorgegeben werden oder mit einer vorbestimmten Begebenheit verknüpft werden. Der Körperschallerreger kann zu mehreren Zeitpunkten die Spannung in der elektrischen Spule messen, beispielsweise jeweils nach einem vorgebbaren Zeitintervall. Das Steuergerät ist dazu eingerichtet, zeitgleich zu dem wenigstens einen vorgebbaren Zeitpunkt die Ist-Stromstärke des Spulenstroms zu regeln somit ist das aktive Schwingungsabsorptionssystem dazu ausgelegt, zeitgleich die Schwingung des schwingenden Elements zu erfassen und die Schwingung zumindest zu absorbieren. Dadurch wird sichergestellt, dass eine kontinuierliche Regelung der Absorption der Schwingung erfolgt, sodass die Absorption auf eine aktuelle Stärke der Schwingung des schwingenden Elements adaptiert ist.

In einer weiteren bevorzugten Ausführungsform der Erfindung ist das Steuergerät dazu ausgelegt, von zumindest zwei Körperschallerregern jeweils ein Messsignal zu empfangen. Das Steuergerät ist ferner dazu ausgelegt, für jeden der zumindest zwei Körperschallerreger eine jeweilige Ist-Stromstärke zu regeln. Hierzu kann das Steuergerät aus dem jeweiligen Messsignal für jeden Körperschallerreger aus dem jeweiligen ermittelten Detektionsanteil die jeweilige Soll-Stromstärke ermitteln. Die Ermittlung der jeweiligen Soll-Stromstärke kann beispielsweise auch korreliert mit der Ermittlung der jeweiligen weiteren Soll-Stromstärke des anderen Körperschallerregers erfolgen. Vorteilhaft wird dadurch, dass die Schwingung des Elements, welches beispielsweise mittels zweier Körperschallerregern absorbiert werden soll, gezielter absorbiert wird, da ein zentrales Steuergerät beide Körperschallerreger steuert.

Bevorzugt ist die elektrische Spule als eine Schwingspule ausgebildet. In bekannter Weise ist die Schwingspule auf einen Schwingspulenträger gewickelt, welcher mit einer Membraneinheit eines Lautsprechers verbunden ist. Durch den angelegten Spulenstrom in der Schwingspule wird diese mittels eines Magnetfelds mit der Membraneinheit in Bewegung versetzt. Das Koppelelement kann in diesem Fall als Membraneinheit ausgebildet sein. Vorteilhaft an der Verwendung der Schwingspule ist, dass diese ein besonders geringes Gewicht aufweist und somit schnell, also mit geringer Trägheit, auf das entstehende Magnetfeld reagiert und die entsprechende Bewegung ausführt. So können Zeitverzögerungen zwischen der Regelung des Spulenstroms auf die Soll-Stromstärke durch das Steuergerät und die zumindest teilweise Absorption der Schwingung des schwingenden Elements durch die Bewegung des Körperschallerregers verringert werden.

Bevorzugt ist der Körperschallerreger als ein Soundaktor ausgebildet. In bekannter Weise kann der Soundaktor dazu ausgelegt sein, einen vorbestimmten Klang/oder ein vorbestimmtes Geräusch zu erzeugen, wie beispielsweise ein Motorgeräusch eines Kraftfahrzeugs. Der Soundaktor ist erfindungsgemäß auch dazu ausgelegt, die Schwingung des schwingenden Elements zumindest teilweise zu absorbieren. Hierzu weist der Soundaktor die gleichen Merkmale wie der bereits beschriebene Körperschallerreger auf. Vorteilhaft daran ist, dass ein bereits bestehendes Bauteil in beispielsweise einem Kraftfahrzeug, nämlich der Soundaktor, eine weitere Funktion, nämlich die der Absorption von unerwünschten Schwingungen, bekommen kann. Somit wird die Möglichkeit, unerwünschte Schwingungen zu absorbieren, bauteilsparend und platzsparend bereitgestellt.

Die Erfindung betrifft auch ein Kraftfahrzeug mit einem aktiven Schwingungsabsorptionssystem nach Anspruch 9, wobei das erfindungsgemäße aktive Schwingungsabsorptionssystem als Kraftfahrzeug ausgestaltet ist. Hierzu ist der bereits beschriebene Körperschallerreger an einem schwingenden oder schwingfähigen Element im Kraftfahrzeug angeordnet. Das schwingende Element ist insbesondere durch ein Blechteil, insbesondere ein Teilbereich eines Daches und/oder eine Motorhaube und/oder eine Heckklappe des Kraftfahrzeugs beschrieben.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen aktiven Schwingungsabsorptionssystems beschrieben worden sind. Aus diesem Grund sind die entsprechenden Weiterbildungen des erfindungsgemäßen Kraftfahrzeugs hier nicht noch einmal beschrieben.

Die Erfindung betrifft auch ein Verfahren zum Betreiben eines aktiven Schwingungsabsorptionssystems zur Absorption einer Schwingung eines schwingenden Elements nach Anspruch 10. In einem ersten Verfahrensschritt erfasst ein Körperschallerreger eine induzierte Spannung in einer elektrischen Spule des Körperschallerregers, welcher mittels eines Koppelelements an das schwingende Element gekoppelt ist. Die elektrische Spule bewegt mittels eines Spulenstroms das Koppelelement und/oder beaufschlagt es mit einer Kraft. Dies erfolgt beispielsweise durch ein Magnetfeld, innerhalb welchen sich die elektrische Spule befindet.

In einem zweiten Verfahrensschritt stellt der Körperschallerreger ein mit der erfassten induzierten Spannung korreliertes Messsignal bereit. In einem dritten Verfahrensschritt empfängt ein Steuergerät das Messsignal und ermittelt in der beschriebenen Weise in Abhängigkeit von dem Messsignal eine Soll-Stromstärke des Spulenstroms. Die Soll-Stromstärke wird derart ermittelt, dass die Bewegung des Koppelelements derart eingestellt wird, dass die Schwingung des schwingenden Elements zumindest teilweise absorbiert wird. In einem vierten Verfahrensschritt regelt das Steuergerät eine Ist-Stromstärke des angelegten Spulenstroms auf die ermittelte Soll-Stromstärke.

Die in dem dritten Verfahrensschritt ermittelte Soll-Stromstärke wird, wie bereits beschrieben, dadurch ermittelt, dass das Steuergerät zunächst einen Detektionsanteil und einen Steueranteil aus dem Messsignal ermittelt. Dabei beschreibt der Detektionsanteil denjenigen Anteil des Messsignals, der die Spannung beschreibt, die durch das schwingende Element in der elektrischen Spule induziert wird. Der Steueranteil beschreibt denjenigen Anteil des Messsignals, welcher durch einen angelegten Spulenstrom in der elektrischen Spule verursacht wird. Die Soll-Stromstärke wird somit durch das Steuergerät in Abhängigkeit des Detektionsanteils ermittelt.

Zu der Erfindung gehören auch Weiterbildungen des erfindungsgemäßen Verfahrens zum Betreiben eines aktiven Schwingungsabsorptionssystems, die Merkmale aufweisen, wie sie bereits im Zusammenhang mit den Weiterbildungen des erfindungsgemäßen aktiven Schwingungsabsorptionssystems beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: eine schematische Darstellung eines aktiven Schwingungsabsorptionssystems mit einem Körperschallerreger und einem Steuergerät; und
- Fig. 2: einen schematische Schnittansicht eines lediglich teilweise dargestellten Körperschallerregers für ein aktives Schwingungsabsorptionssystem.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

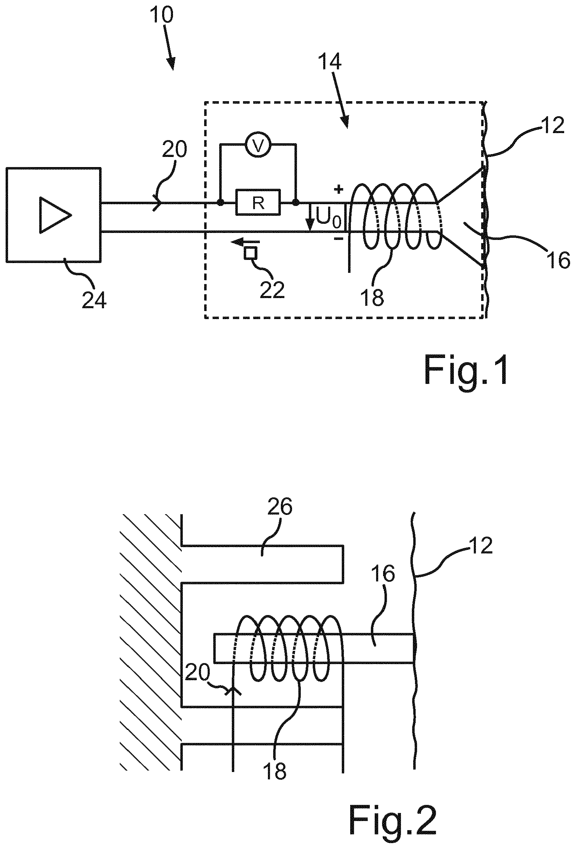

In der Fig. 1 ist ein aktives Schwingungsabsorptionssystem 10 schematisch lediglich teilweise dargestellt. Des Weiteren stellt die Fig. 1 ein schwingendes Element 12 dar. Bei dem schwingenden Element 12 kann es sich beispielsweise um ein Blechteil handeln. Das schwingende Element 12 kann Teil eines Kraftfahrzeugs und/oder eines Flugzeuges und/oder eines Schiffes und/oder einer Baumaschine sein. So kann das aktive Schwingungsabsorptionssystem 10 Anwendung im Luft-/ und Raumfahrtbereich und/oder im Schiffsbaubereich und/oder in der Gebäudetechnik und/oder im Maschinen- und Anlagenbau finden. Beispielsweise handelt es sich bei dem schwingenden Element 12 um eine Aufhängung einer Heckklappe eines Kraftfahrzeugs, insbesondere einem Scharnier und/oder einem Schließbügel. Das schwingende Element 12 wird durch äußere einwirkende Kräfte in Schwingung versetzt, wie beispielsweise die Aufhängung der Heckklappe, welche je nach Antrieb des Kraftfahrzeugs oder einem Zustand einer Fahrbahn in Schwingung versetzt wird. Das aktive Schwingungsabsorptionssystem 10 umfasst einen Körperschallerreger 14, welcher mittels eines Koppelelements 16 mit dem schwingenden Element 12 gekoppelt ist. Dabei kann das Koppelelement 16 Teil des Körperschallerregers 14 sein. Hier ist das Koppelelement 16 beispielsweise als eine Membraneinheit beispielsweise eines Lautsprechers ausgebildet.

Der Körperschallerreger 14 umfasst weiterhin eine elektrische Spule 18, welche beispielsweise als eine Schwingspule ausgebildet ist und auf einem Schwingspulenträger aufgewickelt ist, welcher mit der Membraneinheit verbunden ist. Die elektrische Spule 18 befindet sich in einem hier nicht dargestellten Magnetfeld. Bei Schwingung des schwingenden Elements 12 wird das Koppelelement 16 ebenfalls in Schwingung versetzt. Dabei kann ebenfalls die elektrische Spule 18 in Schwingung versetzt werden. Durch die Bewegung des Koppelelements 16 und/oder durch die Bewegung der elektrischen Spule 18 wird ein elektromagnetischer Strom in der elektrischen Spule 18 induziert. Zusätzlich dazu wird zur Dämpfung und/oder zur Absorption der Schwingung des schwingenden Elements 12 ein Spulenstrom 20 auf die elektrische Spule 18 angelegt. Dieser Spulenstrom 20 bewirkt ebenfalls durch bereits bekannte elektromagnetische Induktionskräfte eine Bewegung des Koppelelements 16 und/oder der elektrischen Spule 18. So kann je nach Stromstärke die Bewegung des Koppelelements 16 so gesteuert werden, dass sie eine Gegenbewegung zu der Schwingung des schwingenden Elements 12 erzeugt und somit die Schwingung des schwingenden Elements 12 zumindest teilweise absorbiert.

Der Körperschallerreger 14 ist dazu ausgelegt, ein Messsignal 22 bereitzustellen, wobei das Messsignal 22 beispielsweise eine gesamte Spannung Uo, die auf die elektrische Spule 18 angelegt ist, beschreibt. Zur Messung der gesamten Spannung Uo ist hier beispielsweise dargestellt, dass ein Widerstand R in dem Schaltkreis der elektrischen Spule 18 geschaltet ist. Ein Voltmeter V misst die gesamte Spannung Uo mittels des Widerstands R. Das Messsignal 22 setzt sich also zusammen aus einem Detektionsanteil, welcher der induzierten Spannung durch die Bewegung des Koppelelements 16 entspricht, und aus einem Steueranteil, welche einer Spannung entspricht, die durch den angelegten Spulenstrom 20 verursacht wird. Das Messsignal 22 enthält somit mindestens einen Signalwert, wobei der mindestens eine Signalwert den Detektionsanteil und den Steueranteil miteinander kombiniert ausdrückt.

An den Körperschallerreger 14 ist ein Steuergerät 24 geschaltet. Das Steuergerät 20 ist dazu eingerichtet, eine Ist-Stromstärke des Spulenstroms 20 zu regeln. Diese Regelung erfolgt in Abhängigkeit des durch den Körperschallerreger 14 bereitgestellten Messsignals 22. Das Steuergerät 24 ist weiterhin dazu eingerichtet, aus dem Messsignal 22 jeweils den Detektionsanteil und den Steueranteil zu ermitteln, beispielsweise über Übertragungsfunktionen. Das Steuergerät 24 ist also dazu ausgelegt, den Detektionsanteil und den Steueranteil voneinander zu separieren. Das Steuergerät 24 ermittelt darauf in Abhängigkeit des Detektionsanteils eine Soll-Stromstärke welche durch die elektrische Spule 18 fließen sollte, damit zu der Schwingung des schwingenden Elements 12 eine aktive Gegenschwingung durch das Koppelelement 16 bewirkt wird.

In der Fig. 2 ist ein alternatives Ausführungsbeispiel des Körperschallerregers 14 dargestellt. Hierzu ist der Körperschallerreger 14 lediglich teilweise und schematisch dargestellt. Die elektrische Spule 18 ist ortsfest an eine Haltevorrichtung 26 angeordnet. Das Koppelelement 16 ist in einem Innenraum, welcher sich durch die elektrische Spule 18 bildet, angeordnet und mit dem schwingenden Element 12 verbunden. Das Koppelelement ist beispielsweise aus einem magnetischen Material gebildet. Bei der Haltevorrichtung 26 kann es sich ebenfalls um einen Permanentmagneten handeln. Je nach Stromstärke, welche durch die elektrische Spule 18 fließt, wird das Koppelelement 16 durch induziert elektromagnetische Kräfte in Bewegung gesetzt. Dabei kann die Bewegungsrichtung des Koppelelements 16 je nach Flussrichtung des Stroms bestimmt werden, wobei das Koppelelement 16 eine Bewegungsachse aufweist, welche beispielsweise parallel zu der Bewegungsachse der Schwingung des schwingenden Elements 12 verläuft. Das Koppelelement 16 wird aber auch je nach Schwingung des schwingenden Elements 12 durch beispielsweise mechanische Impulsübertragung in Bewegung versetzt. Dass sich ändernde Magnetfeld in der elektrischen Spule 18 bewirkt das Fließen eines induzierten Stroms, welcher sich zu dem bereits angelegten Spulenstrom 20 addiert. Somit ist auch in diesem Ausführungsbeispiel eine gezielte Regelung der Bewegung des Koppelelements 16 und somit eine gezielte Dämpfung und/oder Absorption des schwingenden Elements 12 möglich.

Insgesamt zeigen die beiden Ausführungsbeispiele, wie durch das vorliegende aktive Schwingungsabsorptionssystem 10 gleichzeitig eine Schwingung des schwingenden Elements 12 gemessen und eine Tilgung dieser Schwingung herbeigeführt wird. Der Körperschallerreger 14 wird gleichzeitig als Messgerät und als Tilger verwendet. Der Körperschallerreger 14 ist durch eine entsprechende Auslegung, insbesondere einer Größe seiner Masse und/oder Nachgiebigkeit und somit seiner Resonanzfrequenz, an beliebige Zielsysteme, welche das schwingende Element 12 beinhalten, adaptierbar. Die Absorption und/oder Reduktion der Schwingung kann durch eine optimale Regelung, wie beispielsweise einer adaptiven Regelung und/oder einem sogenannten PID Regler und/oder einem Zustandsregler erfolgen. Somit ist keine weitere manuelle Anpassung an das jeweilige Zielsystem notwendig. Das aktive Schwingungsabsorptionssystem 10 benötigt somit beispielsweise nur eine einmalige Kalibrierung und ist dazu ausgelegt, sich selbst je nach Zielsystem neuzukalibrieren.

## Patentansprüche

1. Aktives Schwingungsabsorptionssystem (10) zur Absorption einer Schwingung eines schwingenden Elements (12), umfassend:
- einen Körperschallerreger (14) mit einem Koppelelement (16) zum Koppeln an das schwingende Element (12), wobei das Koppelelement (16) dazu ausgelegt ist, bei Schwingung des schwingenden Elements (12) ebenfalls in Schwingung versetzt zu werden, und mit einer elektrischen Spule (18) zum Bewegen des Koppelelements (16) mittels eines Spulenstroms (20), wobei das Koppelelement (16) weiterhin dazu ausgelegt ist, durch eine Bewegung einen elektromagnetischen Strom in der elektrischen Spule (18) zu induzieren; und
- ein Steuergerät;
**dadurch gekennzeichnet, dass**
der Körperschallerreger (14) dazu eingerichtet ist, eine induzierte Spannung in der elektrischen Spule (18) zu erfassen und ein mit der erfassten induzierten Spannung korreliertes Messsignal (22) bereitzustellen; und das Steuergerät dazu eingerichtet ist, das Messsignal (22) zu empfangen und in Abhängigkeit von dem Messsignal (22) eine Soll-Stromstärke des Spulenstroms (20) zu ermitteln, wobei die Soll-Stromstärke dazu eingerichtet ist, dass die Bewegung des Koppelelements (16) derart eingestellt ist, dass die Schwingung des schwingenden Elements (12) zumindest teilweise absorbiert wird, und das Steuergerät (24) weiterhin dazu eingerichtet ist, eine Ist-Stromstärke des angelegten Spulenstroms (20) auf die Soll-Stromstärke zu regeln,
sowie aus dem Messsignal (22) einen Detektionsanteil und einen Steueranteil zu ermitteln, wobei der Detektionsanteil der durch das schwingende Element (12) induzierten Spannung entspricht und wobei der Steueranteil durch den angelegten Spulenstrom (20) verursacht ist, und die Soll-Stromstärke in Abhängigkeit des Detektionsanteils zu ermitteln.

2. Aktives Schwingungsabsorptionssystem (10) nach Anspruch 1,
**dadurch gekennzeichnet, dass**
das Steuergerät (24) dazu eingerichtet ist, den Detektionsanteil und den Steueranteil gleichzeitig für einen gleichen Signalwert zu ermitteln, wobei der Signalwert in dem Messsignal (22) enthalten ist.

3. Aktives Schwingungsabsorptionssystem (10) nach einem der vorhergehenden Ansprüche,
**dadurch gekennzeichnet, dass**
das Steuergerät (24) dazu eingerichtet ist, den Detektionsanteil und den Steueranteil mittels vorbestimmten Übertragungsfunktionen zu ermitteln.

4. Aktives Schwingungsabsorptionssystem (10) nach einem der vorhergehenden Ansprüche,
**dadurch gekennzeichnet, dass**
zur zumindest teilweisen Absorption der Schwingung des schwingenden Elements (12) das Steuergerät (24) dazu eingerichtet ist, die Soll-Stromstärke derart zu ermitteln, dass eine Bewegungsgeschwindigkeit des schwingenden Elements (12) zu Null geregelt wird.

5. Aktives Schwingungsabsorptionssystem (10) nach einem der vorhergehenden Ansprüche,
**dadurch gekennzeichnet, dass**
der Körperschallerreger (14) dazu eingerichtet ist, zu wenigstens einem vorgebbaren Zeitpunkt die Spannung in der elektrischen Spule (18) zu messen, und das Steuergerät (24) dazu eingerichtet ist, die Ist-Stromstärke zeitgleich zu dem wenigstens einen vorgebbaren Zeitpunkt zu regeln.

6. Aktives Schwingungsabsorptionssystem (10) nach einem der vorhergehenden Ansprüche,
**dadurch gekennzeichnet, dass**
das Steuergerät (24) dazu ausgelegt ist, von zumindest zwei Körperschallerregern (14) jeweils ein Messsignal (22) zu empfangen und für jeden der zumindest zwei Körperschallerreger (14) eine jeweilige Ist-Stromstärke zu regeln.

7. Aktives Schwingungsabsorptionssystem (10) nach einem der vorhergehenden Ansprüche,
**dadurch gekennzeichnet, dass**
die elektrische Spule (18) als eine Schwingspule ausgebildet ist.

8. Aktives Schwingungsabsorptionssystem (10) nach einem der vorhergehenden Ansprüche,
**dadurch gekennzeichnet, dass**
der Körperschallerreger (14) als ein Soundaktor ausgebildet ist.

9. Kraftfahrzeug mit einem aktiven Schwingungsabsorptionssystem (10) nach einem der Ansprüche 1 bis 8,
**dadurch gekennzeichnet, dass**
das aktive Schwingungsabsorptionssystem (10) als Kraftfahrzeug ausgestaltet ist und das schwingende Element (12) in dem Kraftfahrzeug angeordnet ist, wobei das schwingende Element (12) dazu ausgelegt ist, ein Blechteil und/oder ein Dach und/oder eine Motorhaube und/oder eine Heckklappe des Kraftfahrzeugs zu bilden.

10. Verfahren zum Betreiben eines aktiven Schwingungsabsorptionssystems (10) zur Absorption einer Schwingung eines schwingenden Elements (12), umfassend die folgenden Schritte:
- Erfassen einer induzierten Spannung in einer elektrischen Spule (18) eines Körperschallerregers (14), welcher mittels eines Koppelelements (16) an das schwingende Element (12) gekoppelt ist, wobei das Koppelelement (16) durch eine Schwingung des schwingenden Elements (12) in Schwingung versetzt wird und wobei die elektrische Spule (18) mittels eines Spulenstroms (20) das Koppelelement (16) bewegt, wobei durch eine Bewegung des Koppelelements (16) ein elektromagnetischer Strom in der elektrischen Spule (18) induziert wird;
durch die folgenden weiteren Schritte gekennzeichnet:
- Bereitstellen eines mit der erfassten induzierten Spannung korrelierten Messsignals (22) durch den Körperschallerreger (14);
- Empfangen des Messsignals (22) durch ein Steuergerät (24) und Ermitteln einer Soll-Stromstärke des Spulenstroms (20) in Abhängigkeit von dem Messsignal (22), wobei die Soll-Stromstärke derart ermittelt wird, dass die Bewegung des Koppelelements (16) derart eingestellt wird, dass die Schwingung des schwingenden Elements (12) zumindest teilweise absorbiert wird; und
- Regeln einer Ist-Stromstärke des angelegten Spulenstroms (20) auf die ermittelte Soll-Stromstärke durch das Steuergerät (24);
- Ermitteln eines Detektionsanteils und eines Steueranteils aus dem Messsignal (22) durch das Steuergerät (24), wobei der Detektionsanteil der durch das schwingende Element (12) induzierten Spannung entspricht und wobei der Steueranteil durch den angelegten elektrischen Spulenstrom (20) verursacht ist; und
- Ermitteln der Soll-Stromstärke in Abhängigkeit des Detektionsanteils durch das Steuergerät (24).

## Claims

1. An active vibration absorption system (10) for absorbing a vibration of a vibrating element (12), comprising:
- a body sound generator (14) with a coupling element (16) for coupling to the vibrating element (12), wherein the coupling element (16) is adapted to be vibrated upon vibration of the vibrating element (12) and with an electrical coil (18) for moving the coupling element (16) by means of a coil current (20), wherein the coupling element (16) is further adapted to induce by movement an electromagnetic current in the electrical coil (18); and
- a control device, **characterized in that** the body sound generator (14) is adapted to detect an induced voltage in the electrical coil (18) and to provide a signal (22) correlated with the detected induced voltage; and the control device is configured to receive the measurement signal (22) and to determine a target current intensity of the coil current (20) as a function of the measurement signal (22), wherein the target current intensity is set up such that the movement of the coupling element (16) is set such that the vibration of the vibrating element (12) is at least partially absorbed, and the control device (24) is further adapted to control an actual current of the applied coiled current (20) on the target current intensity, as well as from the measurement signal (22) determine a detection portion and a control portion, wherein the detection portion corresponds to the vibrating element (12) induced voltage, and wherein the control portion is caused by the applied coil current (20), and to determine the target current intensity as a function of the detection portion.

2. Active vibration absorption system (10) according to claim 1,
**characterized in that**
the control device (24) is adapted to simultaneously determine the detection portion and the control portion for a same signal value, wherein the signal value is included in the measurement signal (22).

3. Active vibration absorption system (10) according to one of the preceding claims,
**characterized in that**
the control device (24) is adapted to determine the detection portion and the control portion by means of predetermined transfer functions.

4. Active vibration absorption system (10) according to one of the preceding claims,
**characterized in that**
for the at least partial absorption of the vibration of the vibrating element (12), the control device (24) is adapted to determine the target current such that a moving speed of the vibrating element (12) is regulated to zero.

5. Active vibration absorption system (10) according to one of the preceding claims,
**characterized in that**
the body sound generator (14) is adapted to measure the voltage in the electrical coil (18) on at least one predeterminable time, and the control device (24) is adapted to regulate the actual current intensity simultaneously with the at least one predeterminable time.

6. Active vibration absorption system (10) according to one of the preceding claims,
**characterized in that**
the control device (24) is adapted to receive from at least two body sound generators (14) in each case a measurement signal (22) and for each of the at least two body sound generators (14) regulate a respective actual current intensity.

7. Active vibration absorption system (10) according to one of the preceding claims,
**characterized in that**
the electrical coil (18) is designed as a voice coil.

8. Active vibration absorption system (10) according to one of the preceding claims,
**characterized in that**
the body sound generator (14) is designed as a sound actuator.

9. Motor vehicle with an active vibration absorption system (10) according to any of claims 1 to 8,
**characterized in that**
the active vibration absorption system (10) is designed as a motor vehicle and the vibrating element (12) is arranged in the motor vehicle, wherein the vibrating element (12) is designed to form a sheet metal part and/ or a roof and/or an engine bonnet and/or a tailgate of the motor vehicle.

10. A method of operating an active vibration absorption system (10) for absorbing a vibration of a vibrating element (12), comprising the following steps:
- detecting an induced voltage in an electrical coil (18) of a body sound generator (14), which is coupled to the vibrating element (12) by means of a coupling element (16), wherein the coupling element (16) is vibrated by a vibration of the vibrating element (12) and wherein the electrical coil (18) by means of a coil current (20), moves the coupling element (16), wherein by a movement of the coupling element (16) an electromagnetic current is induced in the electrical coil (18),
**characterized by** the following further steps:
- providing a correlated with the detected induced voltage measurement signal (22) through the body sound generator (14);
- receiving the measurement signal (22) by a control device (24) and determining a target current intensity of the coil current (20) as a function of the measurement signal (22), wherein the target current intensity is determined such that the movement of the coupling element (16) is set so that the vibration of the vibrating element (12) is at least partially absorbed; and
- regulating an actual current strength of the applied coil current (20) to the determined target current by the control device (24);
- determining a detection portion and a control portion from the measurement signal (22) by the control device (24), wherein the detection portion corresponds to the vibrating element (12) induced voltage and wherein the control portion is caused by the applied electric coil current (20); and
- determining the target current as a function of the detection portion by the control device (24).

## Revendications

1. Système actif d'absorption de vibrations (10) pour l'absorption d'une vibration d'un élément vibrant (12), comprenant :
- un dispositif d'excitation de bruit de structure (14) avec un élément de couplage (16) destiné au couplage à l'élément vibrant (12), lequel élément de couplage (16) est conçu pour, lorsque l'élément vibrant (12) vibre, être également mis à vibrer, et avec une bobine électrique (18) destinée à déplacer l'élément de couplage (16) au moyen d'un courant de bobine (20), lequel l'élément de couplage (16) est conçu en outre pour induire par un mouvement un courant électromagnétique dans la bobine électrique (18) ;
- un appareil de commande ;
**caractérisé en ce que**
le dispositif d'excitation de bruit de structure (14) est conçu pour détecter une tension induite dans la bobine électrique (18) et fournir un signal de mesure (22) corrélé à la tension induite détectée ; et
l'appareil de commande est conçu pour recevoir le signal de mesure (22) et déterminer en fonction du signal de mesure (22) une intensité de courant théorique du courant de bobine (20), laquelle intensité de courant théorique est conçue pour que le mouvement de l'élément de couplage (16) soit réglé de telle sorte que la vibration de l'élément vibrant (12) est au moins partiellement absorbée, et l'appareil de commande (24) est conçu en outre pour réguler une intensité de courant réelle du courant de bobine appliqué (20) sur l'intensité de courant théorique ainsi que pour déterminer à partir du signal de mesure (22) une composante de détection et une composante de commande, laquelle composante de détection correspond à la tension induite par l'élément vibrant (12) et laquelle composante de commande est provoquée par le courant de bobine appliqué (20), et pour déterminer l'intensité de courant théorique en fonction de la composante de détection.

2. Système actif d'absorption de vibrations (10) selon la revendication 1, **caractérisé en ce que** l'appareil de commande (24) est conçu pour déterminer la composante de détection et la composante de commande simultanément pour une même valeur de signal, laquelle valeur de signal est contenue dans le signal de mesure (22).

3. Système actif d'absorption de vibrations (10) selon l'une quelconque des revendications précédentes, **caractérisé en ce que** l'appareil de commande (24) est conçu pour déterminer la composante de détection et la composante de commande au moyen de fonctions de transfert prédéterminées.

4. Système actif d'absorption de vibrations (10) selon l'une quelconque des revendications précédentes, **caractérisé en ce que**, en vue de l'absorption au moins partielle de la vibration de l'élément vibrant (12), l'appareil de commande (24) est conçu pour déterminer l'intensité de courant théorique de telle sorte qu'une vitesse de mouvement de l'élément vibrant (12) est réglée à zéro.

5. Système actif d'absorption de vibrations (10) selon l'une quelconque des revendications précédentes, **caractérisé en ce que** le dispositif d'excitation de bruit de structure (14) est conçu pour mesurer la tension dans la bobine électrique (18) à au moins un instant pouvant être prescrit et l'appareil de commande (24) est conçu pour régler l'intensité de courant réel en même temps que l'au moins un instant pouvant être prescrit.

6. Système actif d'absorption de vibrations (10) selon l'une quelconque des revendications précédentes, **caractérisé en ce que** l'appareil de commande (24) est conçu pour recevoir d'au moins deux dispositifs d'excitation de bruit de structure (14) à chaque fois un signal de mesure (22) et pour régler une intensité de courant réelle respective pour chacun des au moins deux dispositifs d'excitation de bruit de structure (14).

7. Système actif d'absorption de vibrations (10) selon l'une quelconque des revendications précédentes, **caractérisé en ce que** la bobine électrique (18) est réalisée comme une bobine vibrante.

8. Système actif d'absorption de vibrations (10) selon l'une quelconque des revendications précédentes, **caractérisé en ce que** le dispositif d'excitation de bruit de structure (14) est réalisé comme un actionneur sonore.

9. Véhicule automobile avec un système actif d'absorption de vibrations (10) selon l'une quelconque des revendications 1 à 8, **caractérisé en ce que** le système actif d'absorption de vibrations (10) est réalisé comme un véhicule automobile et l'élément vibrant (12) est agencé dans le véhicule automobile, lequel élément vibrant (12) est conçu pour former une pièce de tôle et/ou un toit et/ou un capot et/ou un hayon du véhicule automobile.

10. Procédé de fonctionnement d'un système actif d'absorption de vibrations (10) pour l'absorption d'une vibration d'un élément vibrant (12), comprenant les étapes suivantes :
- la détection d'une tension induite dans une bobine électrique (18) d'un dispositif d'excitation de bruit de structure (14) qui est couplé à l'élément vibrant (12) au moyen d'un élément de couplage (16), lequel élément de couplage (16) est mis à vibrer par une vibration de l'élément vibrant (12) et laquelle bobine électrique (18) déplace l'élément de couplage (16) au moyen d'un courant de bobine (20), un courant électromagnétique étant alors induit dans la bobine électrique (18) par un mouvement de l'élément de couplage (16),
**caractérisé par** les autres étapes suivantes :
- la fourniture d'un signal de mesure (22), corrélé avec la tension induite détectée, par le dispositif d'excitation de bruit de structure (14) ;
- la réception du signal de mesure (22) par un appareil de commande (24) et la détermination d'une intensité de courant théorique du courant de bobine (20) en fonction du signal de mesure (22), laquelle intensité de courant théorique est déterminée de telle sorte que le mouvement de l'élément de couplage (16) est réglé de telle sorte que la vibration de l'élément vibrant (12) est au moins partiellement absorbée ;
- la régulation d'une intensité de courant réelle du courant de bobine appliqué (20) sur l'intensité de courant théorique déterminée par l'appareil de commande (24) ;
- la détermination d'une composante de détection et d'une composante de commande à partir du signal de mesure (22) par l'appareil de commande (24), laquelle composante de détection correspond à la tension induite par l'élément vibrant (12) et laquelle composante de commande est provoquée par le courant de bobine appliqué (20) ; et
- la détermination de l'intensité de courant théorique en fonction de la composante de détection par l'appareil de commande (24).
